# EUROPÄISCHE PATENTSCHRIFT

(11) **EP 2 186 629 B1**
(45) Veröffentlichungstag und Bekanntmachung des Hinweises auf die Patenterteilung: **21.09.2011**
(21) Anmeldenummer: 09175621.3
(22) Anmeldetag: 11.11.2009
(51) Int. Cl.: B29D 22/00, F16F 9/04, F16F 9/092

(54) **Verfahren zur Herstellung eines Druckbehälters**
Method for making a pressure tank
Procédé de fabrication d'un récipient sous pression

(30) Priorität: 12.11.2008 DE 102008043656
(43) Veröffentlichungstag der Anmeldung: 19.05.2010
(73) Patentinhaber: ZF Friedrichshafen AG, 88038 Friedrichshafen (DE)
(72) Erfinder: Ackermann, Norbert, 53783 Eitorf (DE); Meyer, Thomas, 53721 Siegburg (DE)

(56) Entgegenhaltungen:
- DE-A1- 10 228 021
- US-A- 3 027 600

## Beschreibung

Die Erfindung betrifft ein Verfahren für einen Druckbehälter gemäß dem Oberbegriff nach Patentanspruch 1.

Die DE 102 28 021 B4 beschreibt einen Schwingungsdämpfer mit einem ringförmigen Ausgleichsraum, in dem ein Druckbehälter angeordnet ist. Der Druckbehälter umfasst einen Hüllkörper aus einem Folienmaterial, das am äußeren Rand zu einer Kissenform verschweißt ist. Durch eine Prägung des Kissenrohlings soll erreicht werden, dass sich der Druckbehälter mit einer möglichst geringen Faltenbildung im ringförmigen Ausgleichsraum des Schwingungsdämpfers montieren lässt.

Wie aus der Fig. 2 der DE 102 28 021 84 zu erkennen ist, führt die Prägung zu einer Einschnürung zwischen zwei benachbarten Kissenabschnitten, also an der Außenwandung und an der Innenwandung des Hüllkörpers. Dadurch wird der ringförmige Querschnitt des Ausgleichsraums nicht optimal ausgenutzt.

Aus der gattungsbildenden US 3 027 600 ist ein Schwingungsdämpfer mit einem Druckbehälter in einem Ausgleichsraum bekannt. Der Druckbehälter wird aus einer Folie hergestellt, die in einem nicht näher beschriebenen Verfahren in eine Form gebracht wird, die eine einfache Montage des Druckbehälter im Ausgleichsraum ermöglicht.

Die Aufgabe der Erfindung besteht darin, ein Verfahren zu entwickeln, mit dessen Hilfe ein dem ringförmigen Ausgleichsraum besser angepasster Druckbehälter mit einer optimalen Faltenbildung erreicht werden kann.

Erfindungsgemäß wird die Aufgabe durch die Merkmale des Patentanspruchs 1 gelöst.

Mit dem Verfahren wird der Hüllkörper innenseitig vorgeprägt, hingegen bleibt der Außendurchmesserbereich frei von einer Prägung. Ein derartig vorgeformter Druckbehälter nimmt im eingebauten Zustand im Ausgleichsraum eines Schwingungsdämpfers seine Einbaulage unter definierter Faltenbildung ein.

Als weiterer Optimierungsschritt im Vergleich zum Stand der Technik ist vorgesehen, dass ein in Umfangsrichtung stirnseitiger Rand des Hüllkörpers zu einem Randprägungsprofil der Matrize ausgerichtet wird. Damit kann der Hüllkörper im Randbereich optimal vorgeformt werden, insbesondere im Hinblick auf eine gleichmäßige kissenförmige Prägung.

Gemäß einem weiteren Unteranspruch wird als Druckmedium ein Druckgas verwendet. Damit sind zwei wesentliche Vorteile verbunden. Zum einen bleibt der Hüllkörper im Produktionsablauf trocken und zum anderen wird schneller festgestellt, ob der Hüllkörper auch gasdicht ist. Die Gasdichte eines Druckbehälters ist schwieriger erreichbar als eine Flüssigkeitsdichtheit.

Das Druckgas und ein in der Umgebung des Druckbehälters vorhandenes Prüfgas unterscheiden sich, wobei das Prüfgas im Hinblick auf die Dichtheit des Druckbehälters auf Anteile des Druckgases untersucht wird. Man kann z. B. ein eingefärbtes Druckgas verwenden und eine Verfärbung des Prüfgases kontrollieren.

Bei einer Vorrichtung zur Durchführung des Verfahrens weist die Matrize eine Bogenkontur auf, deren Krümmungsradius der vorbestimmten Einbaulage des Druckbehälters entspricht. Der Herstellzustand soll dem Verwendungszustand möglichst angeglichen sein, um geringstmögliche Abweichungen bei der Faltenbildung des Hüllkörpers zu erreichen.

Die Vorrichtung weist einen Außenzylinder und einen Innenzylinder auf, wobei eine Innenwandung des Außenzylinders als Stützfläche und eine äußere Mantelfläche des Innenzylinders mit ihrem Keilprofil als Matrize wirkt. Im Querschnitt entspricht die Vorrichtung dem späteren Einbauraum des Hüllkörpers.

Der Außen- und der Innenzylinder der Vorrichtung sind über einen Deckel und einen Boden gasdicht verschließbar, wobei die Vorrichtung ein Füllanschluss für den Druckbehälter aufweist. Die Vorrichtung übernimmt damit eine Doppelfunktion, nämlich als Prägewerkzeug und als Prüfmittel.

Zur Automatisierung des Prüfvorgangs weist die Vorrichtung einen Zu- und einen Abflussanschluss für einen Prüfgaskreislauf auf, in dem eine Prüfeinrichtung angeordnet ist.

Es ist vorgesehen, dass der Füllanschluss dem an einem Kolben-Zylinder-Aggregat gleicht, in dem der Druckbehälter montiert wird. Der Druckbehälter soll der Vorrichtung entnommen und ohne weitere Änderungsschritte im Kolben-Zylinder-Aggregat verbaut werden können.

Anhand der folgenden Figurenbeschreibung soll die Erfindung näher erläutert werden.

Es zeigt:
- Fig. 1: Schwingungsdämpfer zum Stand der Technik
- Fig. 2 u. 3: Schnittdarstellungen durch eine Vorrichtung zur Durchführung des er- findungsgemäßen Verfahrens

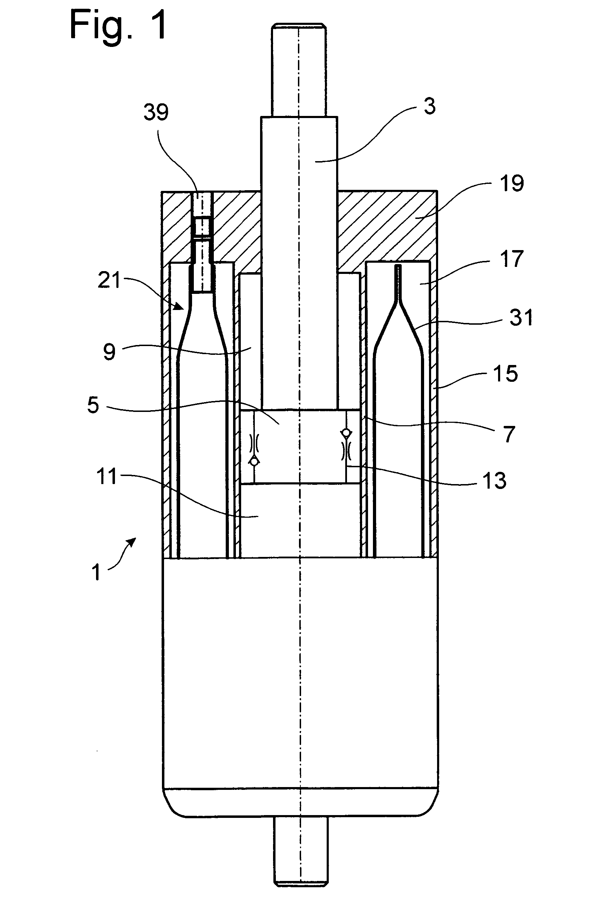

Die Fig. 1 zeigt einen an sich bekannten Schwingungsdämpfer 1 in Zweirohrbauweise, bei dem eine Kolbenstange 3 mit einem Kolben 5 in einem Druckrohr 7 axial beweglich geführt ist. Der Kolben 5 trennt das Druckrohr in einen oberen Arbeitsraum 9 und einen unteren Arbeitsraum 11, wobei beide Arbeitsräume über Dämpfventile 13 im Kolben verbunden sind.

Das Druckrohr 7 wird von einem Behälterrohr 15 eingehüllt, wobei die Innenwandung des Behälterrohres und die Außenwandung des Druckrohres einen ringförmigen Ausgleichsraum 17 bilden, der bis an eine Kolbenstangenführung 19 vollständig mit Dämpfmittel und einem Druckbehälter 21 für eine eingeschlossenen Gasmasse gefüllt ist.

Bei einer Kolbenstangenbewegung wird das verdrängte Kolbenstangenvolumen durch eine Volumenänderung des Druckbehälters 21 bzw. der eingeschlossene Gasmasse ausgeglichen. Der ringförmige Ausgleichsraum 17 stellt die vorbestimmte Einbaulage des Druckkörpers dar.

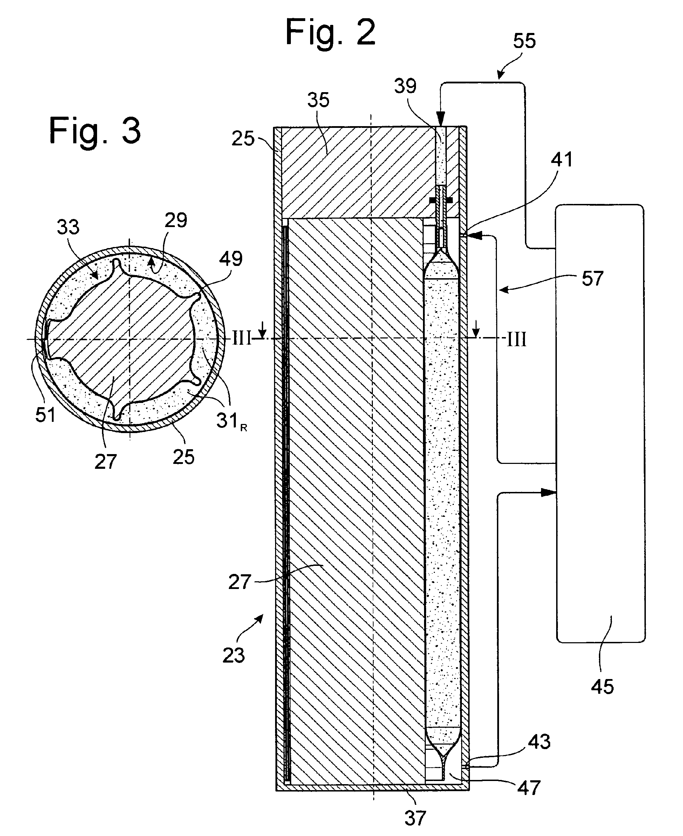

Die Zusammenschau der Figuren 2 und 3 zeigen eine Vorrichtung 23, die, wie der Schwingungsdämpfer 1, einen Außenzylinder 25 und einen Innenzylinder 27 aufweist. Die Innenwandung des Außenzylinders 25 entspricht maßlich dem Behälterrohr 15 und wirkt als Stützfläche 29 für einen Hüllkörper 31 des Druckbehälters 21. Eine äußere Mantelfläche des Innenzylinders soll mit ihrem Keilprofil als Matrize 33 wirken. Die Matrize 33 weist eine Bogenkontur aufweist, deren Krümmungsradius der vorbestimmten Einbaulage des Druckbehälters 21 bzw. dem Außendurchmesser des Druckrohres 7 im Schwingungsdämpfer 1 entspricht.

Der Außen- und der Innenzylinder 25;27 der Vorrichtung sind über einen Deckel 35 und einen Boden 37 gasdicht verschließbar, wobei die Vorrichtung 23 einen Füllanschluss 39 für den Druckbehälter aufweist. Der Füllanschluss 39 gleicht dem an dem Schwingungsdämpfer 1, in dem der Druckbehälter 21 montiert wird.

Des Weiteren weist die Vorrichtung einen Zu- und einen Abflussanschluss 41;43 für einen Prüfgaskreislauf auf. Die Anschlüsse 41;43 verbinden eine Prüfeinrichtung 45 mit einem Ringraum 47, wobei der Ringraum 45 den Einbaurum für den Hüllkörper 31 bestimmt.

Bei dem Verfahren zur Herstellung des Druckbehälters 21 sollen an dem Hüllkörper 31, der in seiner vorbestimmten Einbaulage eine Bogenform einnimmt, kissenförmige Abschnitte durch geprägte Übergänge am Innendurchmesserbereich des Hüllkörpers erzeugt werden. Dafür wird der Hüllkörper 31, der aus zwei ebenen randseitig zusammengeschweißten Wandungen besteht, für die vorgesehenen Einbaulage mit seinem Innendurchmesserbereich einseitig auf eine Matrize 33 aufgelegt, die das erhabene Keilprofil aufweist (s. Fig. 3). Ein vorgesehener Außendurchmesserbereich des Hüllkörpers 31 kann sich an der Stützfläche 29 angelegen, wenn der Hüllkörper 31 mit einem Druckmedium gefüllt wird. Unter dem Druckeinfluss im Inneren des Hüllkörpers 31 wird der Hüllkörper 31 auf die Matrize 33 gespannt und dabei im Bereich des Keilprofils plastisch verformt. Wie aus Fig. 3 ersichtlich ist, ist das Keilprofil auf einem Umfangsbereich gleichmäßig verteilt und sorgt für die Kissenbildung und Übergängen 49 zwischen den Kissen 31_{R}, die einen faltenarmen Einbauzustand des Druckbehälters 21 im Schwingungsdämpfer 1 gewährleisten.

Der Hüllkörper 31 wird nicht willkürlich in die Vorrichtung 23 eingeführt, sondern ein in Umfangsrichtung stirnseitiger Rand 51 des Hüllkörpers wird zu einem Randprägungsprofil 53 der Matrize 33 ausgerichtet.

Nachdem der drucklose Hüllkörper 31 in die Vorrichtung 23 eingelegt ist, wird er über den Füllanschluss 39 mit einem Druckgas 55 als Druckmedium gefüllt. Das Druckgas und ein in der Umgebung des Druckbehälters vorhandenes Prüfgas 57, nämlich in dem von dem Hüllkörper 31 nicht ausgefüllten Ringraum 47 der Vorrichtung 23, unterscheiden sich. Das Prüfgas 57 wird im Herstellungsverfahren des Druckbehälters im Hinblick auf die Dichtheit des Druckbehälters auf Anteile des Druckgases 55 in der Prüfeinrichtung 45 untersucht.

Am Ende des Verfahrens wird der vorgeprägte Druckbehälter 21 gasentleert, aus der Vorrichtung 23 entnommen und in den hinsichtlich seiner Querschnittsabmessungen gleichartigen Schwingungsdämpfer 1 gasleer eingebaut, bevor der Schwingungsdämpfer über die Kolbenstangenführung 19 verschlossen wird. Anschließend erfolgt die Füllung wiederum mit Druckgas 55, wobei der Druckbehälter 21 seine durch die Prägung vorbestimmte Bogenkontur mit den durch das Keilprofil vorgegebenen Kissenabschnitten einnimmt.

### Bezugszeichenliste

- 1: Schwingungsdämpfer
- 3: Kolbenstange
- 5: Kolben
- 7: Druckrohr
- 9;11: Arbeitsräume
- 13: Dämpfventile
- 15: Behälterrohr
- 17: Ausgleichsraum
- 19: Kolbenstangenführung
- 21: Druckbehälter
- 25: Außenzylinder
- 27: Innenzylinder
- 29: Stützfläche
- 31: Hüllkörper
- 31_{R}: Kissen
- 33: Matrize
- 35: Deckel
- 37: Boden
- 39: Füllanschluss
- 41: Zuflussanschluss
- 43: Abflussanschluss
- 45: Prüfeinrichtung
- 47: Ringraum
- 49: Übergänge
- 51: Rand
- 53: Randprägungsprofil
- 55: Druckgas
- 57: Prüfgas

## Patentansprüche

1. Verfahren zur Herstellung eines Druckbehälters (21) mit einem Hüllkörper (31), der in seiner vorbestimmten Einbaulage eine Bogenform einnimmt, wobei der Hüllkörper (31) kissenförmige Abschnitte (31_{R}) aufweist, die durch geprägte Übergänge (49) am Innendurchmesserbereich des Hüllkörpers (31) miteinander verbunden sind, wobei der Hüllkörper (31) für die vorgesehenen Einbaulage mit seinem Innendurchmesserbereich einseitig auf eine Matrize (33) aufgelegt wird, die ein erhabenes Keilprofil aufweist, wobei ein vorgesehener Außendurchmesserbereich des Hüllkörpers (31) an einer Stützfläche (29) angelegt wird,
**dadurch gekennzeichnet,**
**dass** der Hüllkörper (31) mit einem Druckmedium (55) gefüllt wird, wodurch der Hüllkörper (31) auf die Matrize (33) gespannt und dabei im Bereich des Keilprofils plastisch verformt wird.

2. Verfahren nach Anspruch 1,
**dadurch gekennzeichnet,**
**dass** ein in Umfangsrichtung stirnseitiger Rand (51) des Hüllkörpers (31) zu einem Randprägungsprofil (53) der Matrize (33) ausgerichtet wird.

3. Verfahren nach Anspruch 1,
**dadurch gekennzeichnet,**
**dass** als Druckmedium ein Druckgas (55) verwendet wird.

4. Verfahren nach Anspruch 1,
**dadurch gekennzeichnet,**
**dass** sich das Druckgas (55) und ein in der Umgebung des Druckbehälters vorhandenes Prüfgas (57) unterscheiden, wobei das Prüfgas (57) im Hinblick auf die Dichtheit des Druckbehälters (21) auf Anteile des Druckgases (55) untersucht wird.

5. Vorrichtung für ein Verfahren nach Anspruch 1,
**dadurch gekennzeichnet,**
**dass** die Matrize (33) eine Bogenkontur aufweist, deren Krümmungsradius der vorbestimmten Einbaulage des Druckbehälters (21) entspricht.

6. Vorrichtung nach Anspruch 5,
**dadurch gekennzeichnet,**
**dass** die Vorrichtung (23) einen Außenzylinder (25) und einen Innenzylinder (27) aufweist, wobei eine Innenwandung des Außenzylinders (25) als Stützfläche (29)und eine äußere Mantelfläche des Innenzylinders (27) mit ihrem Keilprofil als Matrize (33) wirkt.

7. Vorrichtung nach Anspruch 6,
**dadurch gekennzeichnet,**
**dass** der Außen- und der Innenzylinder (25;27) über einen Deckel (35) und einen Boden (37) gasdicht verschließbar sind, wobei die Vorrichtung ein Füllanschluss (39) für den Druckbehälter (21) aufweist.

8. Vorrichtung nach Anspruch 6,
**dadurch gekennzeichnet,**
**dass** die Vorrichtung (23) einen Zu- und einen Abflussanschluss (41;43) für einen Prüfgaskreislauf aufweist, in dem eine Prüfeinrichtung (45) angeordnet ist.

9. Vorrichtung nach Anspruch 8,
**dadurch gekennzeichnet,**
**dass** der Füllanschluss (39) der Vorrichtung (23) dem an einem Kolben-Zylinder-Aggregat (1) gleicht, in dem der Druckbehälter (21) montiert wird.

## Claims

1. Method for producing a pressure container (21) having an encasing body (31) which assumes an arcuate shape in its predefined installation position, the encasing body (31) having cushion-shaped sections (31_{R}) which are connected to one another by stamped transitions (49) at the internal diameter region of the encasing body (31), the encasing body (31) being placed on one side with its internal diameter region onto a die plate (33) for the provided installation position, which die plate (33) has an elevated wedge profile, a provided external diameter region of the encasing body (31) being placed on a supporting face (29), **characterized in that** the encasing body (31) is filled with a pressure medium (55), as a result of which the encasing body (31) is clamped onto the die plate (33) and in the process is deformed plastically in the region of the wedge profile.

2. Method according to Claim 1, **characterized in that** an end-side edge (51) of the encasing body (31) in the circumferential direction is oriented to an edge stamping profile (53) of the die plate (33).

3. Method according to Claim 1, **characterized in that** a compressed gas (55) is used as pressure medium.

4. Method according to Claim 1, **characterized in that** the compressed gas (55) and a test gas (57) which is present in the surroundings of the pressure container are different, the test gas (57) being examined for proportions of the compressed gas (55) with regard to the pressure tightness of the pressure container (21).

5. Apparatus for a method according to Claim 1, **characterized in that** the die plate (33) has an arcuate contour, the radius of curvature of which corresponds to the predefined installation position of the pressure container (21).

6. Apparatus according to Claim 5, **characterized in that** the apparatus (23) has an outer cylinder (25) and an inner cylinder (27), an inner wall of the outer cylinder (25) acting as supporting face (29) and an outer circumferential face of the inner cylinder (27) acts with its wedge profile as die plate (33).

7. Apparatus according to Claim 6, **characterized in that** the outer and the inner cylinder (25; 27) can be closed in a gas-tight manner via a cover (35) and a base (37), the apparatus having a filling connection (39) for the pressure container (21).

8. Apparatus according to Claim 6, **characterized in that** the apparatus (23) has an inlet and an outlet connection (41; 43) for a test-gas circuit, in which a test device (45) is arranged.

9. Apparatus according to Claim 8, **characterized in that** the filling connection (39) of the apparatus (23) is the same as that on a piston/cylinder assembly (1), in which the pressure container (21) is mounted.

## Revendications

1. Procédé de fabrication d'un récipient sous pression (21) avec un corps d'enveloppe (31) qui adopte une forme courbe dans sa position d'installation prédéterminée, le corps d'enveloppe (31) présentant des portions en forme de coussin (31_{R}) qui sont connectées les unes aux autres par des transitions embouties (49) au niveau de la région de diamètre intérieur du corps d'enveloppe (31), le corps d'enveloppe (31), étant placé pour la position d'installation prévue avec sa région de diamètre intérieur d'un côté sur une matrice (33) qui présente un profilé claveté en saillie, une région de diamètre extérieur prévue du corps d'enveloppe (31) étant appliquée contre une surface de support (29),
**caractérisé en ce que**
le corps d'enveloppe (31) est rempli d'un fluide sous pression (55) de sorte que le corps d'enveloppe (31) soit serré sur la matrice (33) et soit en l'occurrence déformé plastiquement dans la région du profilé claveté.

2. Procédé selon la revendication 1,
**caractérisé en ce**
**qu'**un bord (51) du côté frontal dans la direction périphérique du corps d'enveloppe (31) est orienté vers un profilé d'emboutissage de bord (53) de la matrice (33).

3. Procédé selon la revendication 1,
**caractérisé en ce que**
l'on utilise comme fluide sous pression un gaz sous pression (55).

4. Procédé selon la revendication 1,
**caractérisé en ce que**
le gaz sous pression (55) et un gaz d'essai (57) présent dans l'environnement du récipient sous pression sont différents, le gaz d'essai (57) étant testé en termes d'étanchéité du récipient sous pression (21) pour rechercher des proportions du gaz sous pression (55).

5. Dispositif pour un procédé selon la revendication 1,
**caractérisé en ce que**
la matrice (33) présente un contour courbe, dont le rayon de courbure correspond à la position d'insertion prédéterminée du récipient sous pression (21).

6. Dispositif selon la revendication 5,
**caractérisé en ce que**
le dispositif (23) présente un cylindre extérieur (25) et un cylindre intérieur (27), une paroi intérieure du cylindre extérieur (25) agissant en tant que surface de support (29) et une surface d'enveloppe extérieure du cylindre intérieur (27) agit avec son profilé claveté en tant que matrice (33).

7. Dispositif selon la revendication 6,
**caractérisé en ce que**
le cylindre extérieur et le cylindre intérieur (25 ; 27) peuvent être fermés de manière étanche aux gaz par le biais d'un couvercle (35) et d'un fond (37), le dispositif présentant un raccord de remplissage (39) pour le récipient sous pression (21).

8. Dispositif selon la revendication 6, **caractérisé en ce que**
le dispositif (23) présente un raccord d'afflux et d'évacuation (41 ; 43) pour un circuit de gaz d'essai, dans lequel est disposé un dispositif d'essai (45).

9. Dispositif selon la revendication 8, **caractérisé en ce que**
le raccord de remplissage (39) du dispositif (23) correspond à celui sur une unité cylindre-piston (1) dans laquelle est monté le récipient sous pression (21).
